# EUROPÄISCHE PATENTSCHRIFT

(11) **EP 4 012 240 B1**
(45) Veröffentlichungstag und Bekanntmachung des Hinweises auf die Patenterteilung: **25.09.2024**
(21) Anmeldenummer: 20212814.6
(22) Anmeldetag: 09.12.2020
(51) Int. Cl.: F16L 41/00, F16L 47/02, F16L 47/28, F16L 59/16

(54) **ABZWEIGROHR FÜR SENSORANSCHLUSS**
BRANCH TUBE FOR SENSOR CONNECTION
TUYAU DE DÉRIVATION POUR LE RACCORDEMENT DU CAPTEUR

(43) Veröffentlichungstag der Anmeldung: 15.06.2022
(73) Patentinhaber: Georg Fischer Rohrleitungssysteme AG, 8201 Schaffhausen (CH)
(72) Erfinder: Wermelinger, Jörg, 8200 Schaffhausen (CH)
(74) Vertreter: Fenner, Seraina

(56) Entgegenhaltungen:
- EP-A1- 1 314 539
- EP-A1- 3 656 991
- EP-A2- 2 957 812
- WO-A1-2011/034417
- DE-A1- 102013 015 038
- JP-A- H01 196 546

## Beschreibung

Die Erfindung betrifft ein Verfahren und ein System zum Anbringen eines Abzweigrohres aus Kunststoff vorzugsweise für einen Sensoranschluss an einer vorisolierten Rohrleitung, enthaltend ein Mediumrohr, eine Isolationsschicht und ein Mantelrohr, beinhaltend folgende Schritte:
- Freilegen eines bestimmten Bereichs des Mediumrohres durch Heraustrennen und Entfernen eines zylindrischen Bereichs der Isolationsschicht der Rohrleitung, wobei die Mittelachse des herauszutrennenden zylindrischen Bereichs rechtwinklig zur Rohrleitungsachse der vorisolierten Rohrleitung verläuft,
- Durchbohren der Wandung des Mediumrohres im freigelegtem Bereich,
- Erwärmen des entstandenen Bohrungsumfangs im Mediumrohr mittels Heizwerkzeug,
- Erwärmen des Abzweigrohres mittels Heizwerkzeug,
- Einpressen des erwärmten Abzweigrohres in die erwärmte Bohrung.

Abzweigrohre sind aus dem Stand der Technik bekannt und werden meist für den Anschluss an nicht isolierte Rohrleitungen mittels eines Anbohrsattelstücks oder Anbohr-T-Stücks umgesetzt.

Bei vorisolierten Rohrleitungen wird in der Regel ein bereits vorfabriziertes und vorisoliertes T-Stück in die Rohrleitung eingebaut, was ein nachträgliches Anbringen eines Abzweigrohres erübrigt. In der Regel sind solche T-Stücke mit demselben oder leicht reduzierten Stutzen als Abgang ausgebildet gegenüber den Anschlüssen an die Hauptleitung und somit meist überdimensioniert für den Anschluss von Sensoren. Zudem muss das vor oder während der Installation eingeplant werden oder wenn dies nachträglich erfolgen soll, muss dazu ein Stück aus der verlegten vorisolierten Rohrleitung entfernt werden und ein solches T-Stück eingesetzt werden.

Aus der EP 2 957 812 A2 ist eine isolierte Rohrleitung bekannt an die ein Abzweigrohr angeordnet wird. Wobei dazu die Isolation um das metallische Mediumrohr entfernt wird und anschliessend eine Bohrung ins Mediumrohr eingebracht wird. Das Abzweigrohr wird nun mittels Lichtbogenschweissen am Mediumrohr fixiert.

Die EP 1 314 539 A1 offenbart eine Vorrichtung zum Anschweissen von Verbindungselementen an Kunststoffrohrleitungswandungen. Die WO2011034417A1 offenbart eine Rohrleitungsbaugruppe zum Verbinden von Verbindungsbaugruppen. Im oben aufgeführten Stand der Technik ist es mehr oder weniger erforderlich, bei bereits vorisolierten Rohrleitungen mit einem Mediumrohr aus Kunststoff ein standard T-Stück einzuplanen und einzubauen, das für Sensorzugänge meist überdimensioniert ist. Oder als Alternative aus den bekannten Systemen, die Verwendung eines metallischen Mediumrohrs und das anzuschliessende Abzweigrohr ebenfalls aus einem metallischen Werkstoff, wobei hier der Nachteil des metallischen Werkstoffs ist und dies in manchen Bereichen aufgrund der Anwendung nicht zulässig ist und auch ein höheres Gewicht und Korrosionsprobleme mit sich bringt.

Es ist Aufgabe der Erfindung ein System und ein damit verbundenes Verfahren vorzuschlagen, das ermöglicht an bereits verlegten, vorisolierte Rohrleitungen mit einem Mediumrohr aus Kunststoff ein Abzweigrohr oder ein Formstück mit rohrförmigen Anschlussbereich aus Kunststoff anzuschliessen, wobei der Anschluss eine genügend hohe Stabilität aufweisen muss. Zudem soll das durchfliessende Medium im Mediumrohr möglichst nicht durch das Abzweigrohr behindert werden wie auch das Anschliessen eines Abzweigrohres einfach durchzuführen sein soll aber dennoch gewährleistet ist, dass die Befestigung den Anforderungen entspricht und neben einer hohen Masshaltigkeit auch eine Reproduzierbarkeit gewährleistet.

Diese Aufgabe wird erfindungsgemäss durch den Gegenstand des unabhängigen Anspruchs 1 und des unabhängigen Anspruchs 8 gelöst. Gemäss dem Verfahren nach Anspruch 1 erfolgt das Erwärmen des Bohrungsumfangs und das Erwärmen des Abzweigrohres gleichzeitig.

Zudem ist das Abzweigrohr am mit der Rohrleitung zu verschweissenden Ende konisch ausgebildet und durch Erwärmung mittels Schweisstool am Mediumrohr angeschweisst.

Das erfindungsgemässe Verfahren zum Anbringen eines Abzweigrohres an einer vorisolierten Rohrleitung, enthaltend ein Mediumrohr aus Kunststoff, eine Isolationsschicht und ein Mantelrohr, beinhaltet die folgenden Schritte. Um das Abzweigrohr am Mediumrohr anschliessen zu können wird das Mediumrohr freigelegt. Dies erfolgt durch ein Heraustrennen des Mantelrohres und der Isolationsschicht, wobei dazu ein zylindrischer Bereich der Isolationsschicht und des darüber angeordneten Mantelrohres abgetrennt und entfernt wird. Die Mittelachse des herauszutrennenden zylindrischen Bereichs verläuft senkrecht bzw. im rechten Winkel zur Mittelachse der vorisolierten Rohrleitung. Um die Rechtwinkligkeit zur Rohrleitung sicherzustellen, kann vorzugsweise mit einer auf die Rohrleitung aufgesetzten Führung gearbeitet werden, die das Trennwerkzeug beim Heraustrennen bzw. Abtrennen des zylindrischen Bereichs führt. Das Heraustrennen bzw. Abtrennen erfolgt vorzugsweise mittels eines Trennwerkzeugs, beispielsweise einer Lochsäge, wodurch eine zylindrische Form aus der Isolationsschicht und dem Mantelrohr abgetrennt wird und mittels eines weiteren Werkzeugs, wie beispielsweise eines Schraubenziehers, kann die Isolationsschicht herausgebrochen werden. Durch das vorhergehende Trennen des zylindrischen Bereichs liegt eine saubere Kontur vor. Anschliessend wird im freigelegten Bereich die Wandung des Mediumrohres durchbohrt. Für das Durchbohren kann mit einem Bohrwerkzeug gearbeitet werden, welches an die Geometrie des zylindrischen Bereichs angepasst ist, damit eine exakte Führung gewährleisten werden kann. Das heisst, vorzugsweise weist das Bohrwerkzeuge einen Bereich auf, der dem Durchmesser des zylindrischen Bereichs entspricht, wodurch das Bohrwerkzeug axial geführt ist. Der entstandene Bohrumfang wird mittels eines Heizwerkzeugs erwärmt, wobei die Form des Heizwerkzeugs vorzugsweise konisch ausgebildet ist. Das anzuschliessende Abzweigrohr wird ebenso mittels eines Heizwerkzeugs erwärmt. Daraufhin wird das Abzweigrohr mit dem erwärmten Ende in die erwärmte Bohrung gepresst und für einige Sekunden so gehalten bis sich die Schweissnaht, die sich gebildet hat etwas verfestigt. Erfindungsgemäss erfolgt das Erwärmen des Umfangs der Bohrung im Mediumrohr und das Erwärmen des Abzweigrohres gleichzeitig.

Es ist vorteilhaft, wenn das Erwärmen des Umfanges der Bohrung im Mediumrohr und das Ende des Abzweigrohres mit demselben Heizwerkzeug erfolgt. Vorzugsweise weist das Heizwerkzeug dazu zwei Heizkulissen auf, die gleichzeitig erwärmt werden und an denen jeweils der Bohrungsumfang und das Abzweigrohr erwärmt werden.

Es ist vorteilhaft, wenn das Freilegen mittels eines Trennwerkzeugs erfolgt, wobei das Trennwerkzeug zentrisch geführt wird. Dazu wird vorzugsweise ein zentraler Führungsbohrer zur Zentrierung des Trennwerkzeugs verwendet und gleichzeitig eine Führungsbohrung durch den Rohrleitungsquerschnitt gebildet.

Es ist vorteilhaft wenn das Durchbohren der Wandung des Mediumrohres zweifach geführt wird, wobei dies mittels der Führungsbohrung und dem Durchmesser des zylindrischen Bereichs erzielt wird. Das Bohrwerkzeug weist vorzugsweise einen zentralen Führungsbohrer auf sowie im oberen Bereich einen Durchmesser, der mit dem Durchmesser des zylindrischen Bereichs fluchtet, wodurch der Bohrvorgang zweifach geführt ist und dadurch eine senkrechte und gerade Ausrichtung zur Mittelachse gewährleistet.

Als bevorzugte Ausführungsform ist auch der Fügevorgang mit Hilfe des Durchmessers des zylindrischen Bereichs geführt. Dazu fluchtet der Aussendurchmesser der Halterung mit Durchmesser des zylindrischen Bereichs.

Vorzugsweise erfolgt das Einpressen des Abzweigrohres bis an einen vorgegebenen Anschlag, wobei der Anschlag an der Halterung oder am Abzweigrohr angeordnet ist.

Als vorteilhaft hat sich auch gezeigt, wenn die Tiefe des herauszutrennenden zylindrischen Bereichs der Isolationsschicht über einen Anschlag am Trennwerkzeug festgelegt wird. Dadurch ist gewährleistet, dass nicht zu tief in das Rohr hineingeschnitten wird um zu vermeiden, dass das Mediumrohr verletzt wird, aber dennoch sichergestellt wird, dass die Isolationsschicht in diesem zylindrischen Bereich bis hin zur Aussenmantelfläche des Mediumrohres entfernt werden kann.

Gemäss einer bevorzugten Ausführungsform wird das Durchbohren der Wandung des Mediumrohres bis zu einem festgelegten Anschlag durchgeführt. Dadurch wird sichergestellt, dass nicht aus Versehen in die gegenüberliegende Wandung hineingebohrt wird und das Mediumrohr an der Innenmantelfläche verletzt wird.

Die vorliegende Erfindung offenbart ein System eines Abzweigrohres für einen Sensoranschluss an einer verlegten, vorisolierten Rohrleitung bestehend aus einem Mediumrohr aus Kunststoff, einem Mantelrohr und einer dazwischen angeordneten Isolationsschicht. An der Rohrleitung liegt ein freigelegter zylindrischer Bereich vor, wo die Isolationsschicht und das Mantelrohr entfernt wurden. Der zylindrische Bereich bzw. dessen Mittelachse ist rechtwinklig auf die Mittelachse der Rohrleitung ausgerichtet. Durch die Wandung des Mediumrohres verläuft eine Bohrung konzentrisch zum zylindrischen Bereich. Zudem weist das System ein in der Bohrung angeordnetes Abzweigrohr auf. Das Abzweigrohr ist am zu verschweissenden Ende konisch ausgebildet und mit dem Mediumrohr verschweisst, wobei die Schweissung durch die Erwärmung des Abzweigrohres und die Erwärmung des Umfangs der Bohrung im Mediumrohr mittels Heizwerkzeug durchgeführt wird. Durch die konische Form am Ende des Abzweigrohres ist gewährleistet, dass das Abzweigrohr nur soweit durch die Bohrung ragt, dass der Umfang der Bohrung bzw. dessen Mantelfläche komplett am Abzweigrohr anliegt auch wenn die Bohrung nicht mit der Mittelachse des Mediumrohres fluchtet bzw. nicht zentrisch auf das Mediumrohr ausgerichtet ist. Ein solcher Versatz kann entstehen, wenn das Mantelrohr nicht konzentrisch mit dem Mediumrohr verläuft. Dies kann durchaus der Fall sein bei vorisolierten Rohren. Aufgrund dessen, dass das Abzweigrohr zentrisch auf das Mantelrohr gerichtet ist, was aufgrund des Verfahrens zum Anschliessen des Abzweigrohrs und dem Anbringen des zylindrischen Bereichs erfolgt, kann es sein, dass die Mittelachse der Bohrung versetzt zum Zentrum des Mediumrohres verläuft. Würde hier nun ein zylindrisches Ende eines Abzweigrohres eingebracht werden, müsste das weit in das Mediumrohr hineinragen um sicher zu stellen, dass die komplette Mantelfläche des Bohrumfangs am Abzweigrohr anliegt, da bei einem Versatz auf der einen Seite der Bohrung die Bohrungsmantelfläche tiefer hinunter ragt. Mittels eines Konus als Ende des Abzweigrohres, welcher von der Bohrung aufgenommen wird, ist auch bei einem exzentrischen Versatz gewährleistet, dass das Abzweigrohr nicht tief in das Mediumrohr hineinragt. Aufgrund des Konus weist das Abzweigrohr am Ende einen kleineren Durchmesser auf was eine kleinere Bohrung bedarf. Dennoch bildet die Mantelfläche der Bohrung durch die schräge Kontaktfläche mit dem Konus eine genügend grosse Auflagefläche um die benötigte Stabilität der Verschweissung zu erreichen.

Vorzugsweise weist der Konus am Ende des Abzweigrohres einen Winkel zwischen 10 bis 45° auf, vorzugsweise 18 bis 35°.

Vorzugsweise weist das Abzweigrohr einen Anschlag zur Begrenzung des Fügewegs auf, wobei der Anschlag durch eine am Aussendurchmesser des Abzweigrohres angeordnete Schulter gebildet ist oder durch das Ende des Abzweigrohres indem der Anschlag in der Halterung während des Fügens axial begrenzt ist.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: den Ablauf des erfindungsgemässen Verfahrens und
- Fig. 2: einen Schnitt durch ein zylindrisches Abzweigrohr und ein erfindungsgemässes konisches Abzweigrohr.

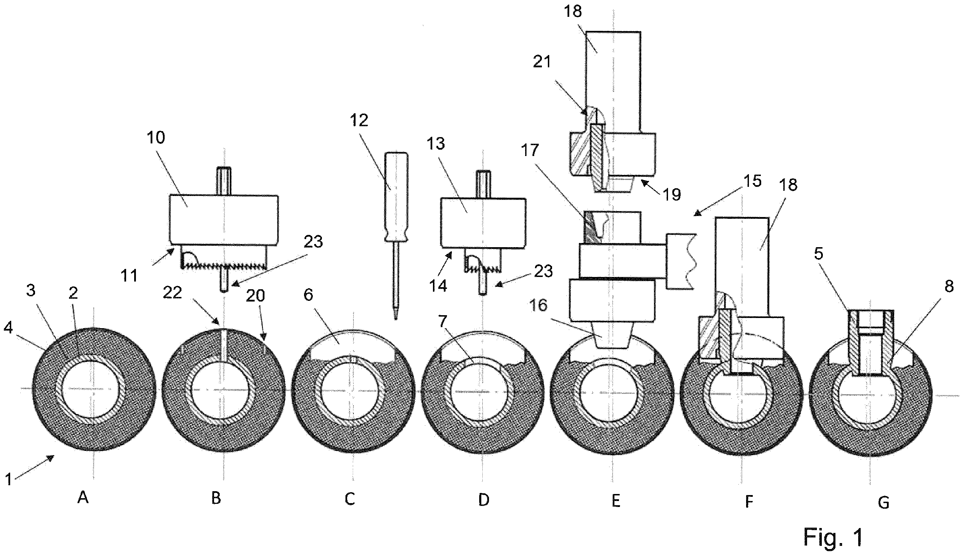

Die in Fig. 1 dargestellte Zeichnung zeigt den Ablauf des erfindungsgemässen Verfahrens schrittweise von A - G. Unter der Abbildung A ist der Querschnitt einer vorisolierten Rohrleitung 1 abgebildet. Daraus ist das Mediumrohr 2 aus Kunststoff, das Mantelrohr 3 und die Isolationsschicht 4 ersichtlich. Vorzugsweise ist auch das Mantelrohr 3 aus einem Kunststoff jedoch sind für das Mantelrohr 3 auch andere Werkstoffe denkbar, beispielsweise metallische Werkstoffe. Abbildung B zeigt das Trennwerkzeug 10, welches zum Freilegen bzw. Heraustrennen oder Abtrennen eines zylindrischen Bereichs 6 in der Isolationsschicht 4 mit dem darüber liegenden Mantelrohr 3 dient, vorzugsweise wird dazu eine Lochsäge eingesetzt. In der Abbildung B ist ersichtlich, dass eine zylindrische Abtrennung 20 erfolgt ist, vorzugsweise wird in der Mitte des Trennwerkzeugs 10 zur Zentrierung ein Führungsbohrer 23 eingesetzt, der gewährleistet, dass der zylindrische Bereich 6 zentrisch im rechten Winkel auf das Mantelrohr 4 gerichtet ist und eine Führungsbohrung 22 für den weiteren Arbeitsschritt herstellt. Ebenso ist es vorteilhaft, wenn das Werkzeug 10 zum Trennen einen Anschlag 11 für die Tiefe aufweist, dadurch wird gewährleistet, dass das Mediumrohr 2 nicht verletzt wird aber dennoch der zylindrische Bereich 6 genügend tief ausgenommen ist, dass das Mediumrohr 2 freigelegt werden kann. In Abbildung C ist der zylindrische Bereich 6 freigelegt, indem die Isolation und ein Teil des Mantelrohrs entfernt wurde, wobei vorzugsweise ein Schraubenzieher als Hilfsmittel eingesetzt wird, um die Isolation herauszubrechen. Die eingeschnittene Nut durch das Trennwerkzeug erlaubt es einen sauberen zylindrischen Bereich 6 zu haben. Anschliessend wird die Wandung des Mediumrohres 2 im freigelegten Bereich 6 durchbohrt, ersichtlich in Abbildung D. Auch dazu wird bevorzugt eine Lochsäge mit kleinerem Durchmesser verwendet, aber auch ein grosser Bohrer wäre denkbar. Das Bohrwerkzeug 13 hat einen Führungsdurchmesser der dem Durchmesser des zylindrischen Bereichs 6 entspricht und mit der zentrischen Führungsbohrung 22 und dem Führungsbohrer 23 bzw. der zweifachen Führung wird gewährleistet, dass ebenfalls ein senkrechtes Anbohren des Mediumrohres möglich ist. Auch hier wird vorzugsweise mit einem Anschlag 14 für die Tiefe gearbeitet, damit gewährleistet ist, dass nicht in die gegenüberliegende Wandung gebohrt wird oder das Mediumrohr an der Innenmantelfläche verletzt wird. Abbildung E zeigt das erfindungsgemässe Verfahren nach dem Erwärmen der Bohrung 7 und dem Abzweigrohr 5. Das Heizwerkzeug 15 weist an einem Ende eine Heizkulisse auf, der als Konus 16 ausgebildet ist mit dem die Bohrung 7 bzw. die Mantelfläche der Bohrung erwärmt wird. In der Abbildung E ist gut ersichtlich, dass das Erwärmen bereits stattgefunden hat, da die zuvor zylindrische Bohrung 7 nun nach dem Anwärmen durch den Konus 16 eine konische Form aufweist. Gleichzeitig wird auf der anderen Seite des Heizwerkzeugs 15 mit der Heizkulisse die als Innenkonus 17 ausgebildet ist, das Abzweigrohr 5 erwärmt bzw. das zu verschweissende Ende des Abzweigrohres 5, welches als Konus 8 ausgebildet ist.

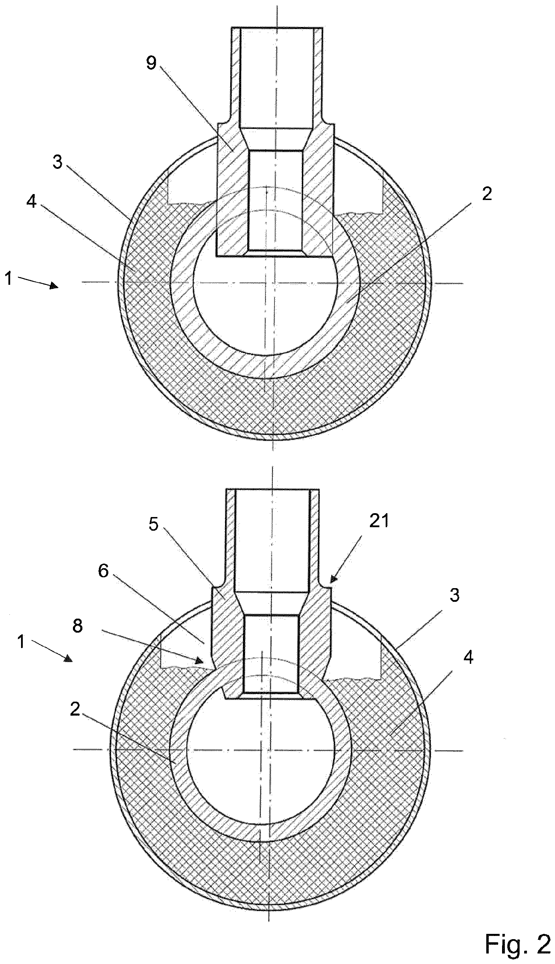

Das Heizwerkzeug ist ebenfalls mit einem Führungsdurchmesser ausgerüstet der ebenfalls am Durchmesser des zylindrischen Bereichs 6 die Ausrichtung zusätzlich gewährleistet. Vorzugsweise ist das Abzweigrohr 5 in einer Halterung 18 angeordnet, die es ermöglicht das Abzweigrohr 5 korrekt am Schweissspiegel 17 zu positionieren. Die Erwärmung der Teile dauert einige Sekunden. Dann wird das Heizwerkzeug 15 entfernt und das Abzweigrohr 5 mithilfe der Halterung 18 in die Bohrung 7 gepresst, was aus Abbildung F zu entnehmen ist. Um eine reproduzierbare Schweissung zu gewährleisten wird das Fügen des Abzweigrohres mit der Bohrung im Mediumsrohr wegbegrenzt durchgeführt. Dazu weist die Halterung 18 in der das Abzweigrohr 5 zum Erwärmen und Fügen angeordnet ist vorzugsweise einen Anschlag 19 auf, dieser begrenzt den Fügeweg, wodurch die Anpresskraft nicht limitiert ist und jede Schweissung gleich ausfällt, egal von welchem Installateur ausgeführt. Zudem ist es vorteilhaft wenn ein Anschlag 21 auch direkt am Abzweigrohr angeordnet ist um den Fügeweg zu begrenzen. Dazu wird der Anschlag 21, welcher vorzugsweise durch das Abzweigrohrende gebildet wird oder alternativ durch eine Schulter wie in Fig. 2 dargestellt, axial begrenzt indem der Anschlag in der Halterung ansteht. Des Weiteren dient die Halterung 18 auch der Führung und weist vorzugsweise einen Aussendurchmesser auf, der mit dem Durchmesser des zylindrischen Bereichs 6 korreliert, wodurch die Halterung 18 beim Anpressen geführt ist. In Abbildung G ist das fertig verschweisste System eines Abzweigrohrs 5 für einen Sensoranschluss ersichtlich.

Fig. 2 zeigt eine Schnittansicht durch eine vorisolierte Rohrleitung 1 mit einem zylindrischen Abzweigrohr, was aus dem Stand der Technik bekannt ist. In Fig. 2 soll der Effekt der Exzentrizität des angeschlossenen Abzweigrohrs mit zylindrischem Ende oder einem erfindungsgemässen konischen Ende aufgezeigt werden.

Beide Varianten zeigen das Abzweigrohr mit demselben Versatz zur Mitte des Mediumrohres 2. Bei der oberen Abbildung mit zylindrischem Ende ist deutlich ersichtlich, dass das Ende des Abzweigrohres weiter in das Mediumrohr hineinragt und so einen ungewollten Widerstand bildet. Da es zwingend für eine gute Stabilität ist, dass die komplette Mantelfläche der Bohrung das Ende des Abzweigrohres umgibt, muss das Abzweigrohr so tief platziert werden ansonsten wäre nicht gewährleistet, dass das Abzweigrohr auf der linken Seite genügend vom Bohrungsumfang gestützt ist wie auch zu wenig Material für eine gute Verschweissung vorliegen würde.

Hingegen bei der erfindungsgemässen Lösung mit einem Konus 8 am Ende des Abzweigrohres 5 fällt die Bohrung 7 kleiner aus und muss dadurch auch nicht so weit nach unten in das Medimrohr 2 ragen um vom kompletten Bohrungsumfang gestützt zu werden bzw. damit genügend Material für eine Schweissung vorliegt. Der Konus 8 weist einen Konuswinkel α zwischen 10 und 45° auf.

### Bezugszeichenliste

- 1: Rohrleitung
- 2: Mediumrohr
- 3: Mantelrohr
- 4: Isolationsschicht
- 5: Abzweigrohr
- 6: zylindrischer Bereich
- 7: Bohrung
- 8: Konus Abzweigrohr
- 9: zylindrischer Abzweigrohr Stand der Technik
- 10: Trennwerkzeug
- 11: Tiefenanschlag Trennwerkzeug
- 12: Schraubenzieher
- 13: Bohrwerkzeug
- 14: Anschlag Bohrwerkzeug
- 15: Heizwerkzeug
- 16: Konus-Heizkulisse
- 17: Innenkonus-Heizkulisse
- 18: Halterung
- 19: Anschlag Halterung
- 20: zylindrische Abtrennung
- 21: Anschlag am Abzweigrohr
- 22: Führungsbohrung
- 23: Führungsbohrer

## Patentansprüche

1. Verfahren zum Anbringen eines Abzweigrohres (5) aus Kunststoff an einer vorisolierten Rohrleitung (1) enthaltend ein Mediumrohr (2) aus Kunststoff, eine Isolationsschicht (4) und ein Mantelrohr (3), wobei das Abzweigrohr (5) an dessen mit der Rohrleitung (1) zu verschweissendem Ende (8) konisch ausgebildet ist, beinhaltend folgende Schritte:
• Freilegen eines bestimmten Bereichs des Mediumrohres (2) durch Heraustrennen und Entfernen eines zylindrischen Bereichs (6) des Mantelrohres (2) und der Isolationsschicht (4) der Rohrleitung (1), wobei die Mittelachse des herauszutrennenden zylindrischen Bereichs (6) rechtwinklig zur Rohrleitungsachse der vorisolierten Rohrleitung (1) verläuft,
• Durchbohren der Wandung des Mediumrohres (2) im freigelegtem Bereich,
• Erwärmen des entstandenen Bohrungsumfangs (7) im Mediumrohr (2) mittels Heizwerkzeug (15),
• Erwärmen des Abzweigrohres mittels Heizwerkzeug (15),
• Einpressen des erwärmten Abzweigrohres (5) in die erwärmte Bohrung (7),
wobei das Erwärmen des Bohrungsumfangs (7) und das Erwärmen des Abzweigrohres (5) gleichzeitig erfolgt.

2. Verfahren nach Anspruch 1, **dadurch gekennzeichnet, dass** das Erwärmen des Bohrungsumfangs (7) und das Erwärmen des Abzweigrohres (5) mit demselben Heizwerkzeug (15) erfolgt.

3. Verfahren nach einem der Ansprüche 1 oder 2, **dadurch gekennzeichnet, dass** das Freilegen mittels eines Trennwerkzeugs (10) erfolgt, wobei das Trennwerkzeug (10) zentrisch geführt wird.

4. Verfahren nach einem der Ansprüche 1 bis 3, **dadurch gekennzeichnet, dass** das Durchbohren der Wandung des Mediumsrohres (2) zweifach geführt wird.

5. Verfahren nach einem der Ansprüche 1 bis 4, **dadurch gekennzeichnet, dass** das Einpressen des erwärmten Abzweigrohres (2) bis an einen vorgegebenen Anschlag (19, 21) erfolgt.

6. Verfahren nach einem der Ansprüche 1 bis 5, **dadurch gekennzeichnet, dass** die Tiefe des herauszutrennenden zylindrischen Bereichs (6) über einen Anschlag (11) am Trennwerkzeug (10) festgelegt wird.

7. Verfahren nach einem der Ansprüche 1 bis 6, **dadurch gekennzeichnet, dass** das Durchbohren der Wandung des Mediumsrohres (2) bis zu einem festgelegten Anschlag (14) erfolgt.

8. System mit einem Abzweigrohr (5) aus Kunststoff und einer vorisolierten Rohrleitung (1), bestehend aus einem Mediumrohr (2) aus Kunststoff, einem Mantelrohr (3) und einer dazwischen angeordneten Isolationsschicht (4), wobei das Abzweigrohr (5) vorzugsweise für einen Sensoranschluss an einer verlegten, vorisolierten Rohrleitung (1) ist, wobei ein freigelegter zylindrischer Bereich (6) im Mantelrohr (3) und in der Isolationsschicht (4) vorliegt, wobei die Mittelachse des zylindrischen Bereichs (6) rechtwinklig zur Mittelachse der vorisolierten Rohrleitung (1) verläuft und eine konzentrisch zur Mittelachse des zylindrischen Bereichs (6) angeordnete Bohrung (7) durch die Wandung des Mediumrohres (2) verläuft, wobei das Abzweigrohr (5) in der Bohrung (7) angeordnet ist, wobei das Abzweigrohr (5) an dessen mit der Rohrleitung (1) zu verschweissenden Ende (8) konisch ausgebildet ist und durch Erwärmung mittels Heizwerkzeug (15) am Mediumrohr angeschweisst ist.

9. System nach Anspruch 8, **dadurch gekennzeichnet, dass** der Konus am Ende (8) des Abzweigrohres (5) zwischen 105 bis 45° aufweist, vorzugsweise 18 bis 35°.

10. System nach einem der Ansprüche 8 oder 9, **dadurch gekennzeichnet, dass** am Abzweigrohr (2) einen Anschlag (21) zur Begrenzung des Fügewegs angeordnet ist.

11. System nach Anspruch 10, **dadurch gekennzeichnet, dass** der Anschlag (21) durch das Abzweigrohrende oder eine Schulter gebildet wird.

## Claims

1. Method for attaching a branch pipe (5) made of plastic to a pre-insulated pipeline (1) containing a medium pipe (2) made of plastic, an insulation layer (4) and a casing pipe (3), wherein the branch pipe (5) is designed with a conical shape at the end (8) to be welded to the pipeline (1), including the following steps:
• exposing a specific region of the medium pipe (2) by cutting out and removing a cylindrical region (6) of the casing pipe (2) and the insulation layer (4) of the pipeline (1), wherein the central axis of the cylindrical region (6) to be cut out runs perpendicular to the pipeline axis of the pre-insulated pipeline (1),
• drilling through the wall of the medium pipe (2) in the exposed region,
• heating the resulting bore circumference (7) in the medium pipe (2) by means of a heating tool (15),
• heating the branch pipe by means of a heating tool (15),
• pressing the heated branch pipe (5) into the heated bore (7),
wherein the heating of the bore circumference (7) and the heating of the branch pipe (5) occur simultaneously.

2. Method according to Claim 1, **characterized in that** the heating of the bore circumference (7) and the heating of the branch pipe (5) are done using the same heating tool (15).

3. Method according to any one of Claims 1 or 2, **characterized in that** the exposure is carried out by means of a cutting tool (10), wherein the cutting tool (10) is centrally guided.

4. Method according to any one of Claims 1 to 3, **characterized in that** the drilling of the wall of the medium pipe (2) is guided in two ways.

5. Method according to any one of Claims 1 to 4, **characterized in that** the heated branch pipe (2) is pressed in until it reaches a predetermined stop. (19, 21).

6. Method according to any one of Claims 1 to 5, **characterized in that** the depth of the cylindrical region (6) to be cut out is determined by a stop (11) on the cutting tool (10).

7. Method according to any one of Claims 1 to 6, **characterized in that** the drilling of the wall of the medium pipe (2) is carried out up to a specified stop (14).

8. System having a branch pipe (5) made of plastic and a pre-insulated pipeline (1) consisting of a medium pipe (2) made of plastic, a casing pipe (3) and an insulation layer (4) arranged therebetween, wherein the branch pipe (5) is preferably for a sensor connection to an installed, pre-insulated pipeline (1), wherein there is an exposed cylindrical region (6) in the casing pipe (3) and in the insulation layer (4), wherein the central axis of the cylindrical region (6) runs perpendicular to the centre axis of the pre-insulated pipeline (1) and a bore (7) arranged concentrically to the centre axis of the cylindrical region (6) runs through the wall of the medium pipe (2), wherein the branch pipe (5) is arranged in the bore (7),
wherein the branch pipe (5) is designed with a conical shape at the end (8) to be welded to the pipeline (1) and is welded to the medium pipe by heating by means of a welding tool (15).

9. System according to Claim 8, **characterized in that** the cone at the end (8) of the branch pipe (5) has an angle between 10 and 45°, preferably between 18 and 35°.

10. System according to any one of Claims 8 or 9, **characterized in that** a stop (21) to limit the insertion path is arranged at the branch pipe (2).

11. System according to Claim 10, **characterized in that** the stop (21) is formed by the branch pipe end or a shoulder.

## Revendications

1. Procédé de montage d'un tuyau de dérivation (5) en matière plastique sur une conduite pré-isolée (1) contenant un tuyau de milieu (2) en matière plastique, une couche d'isolation (4) et un tuyau d'enveloppe (3), le tuyau de dérivation (5) étant réalisé sous forme conique à son extrémité (8) à souder à la conduite (1), comportant les étapes suivantes :
- le dégagement d'une zone déterminée du tuyau de milieu (2) en découpant et en enlevant une zone cylindrique (6) du tuyau d'enveloppe (2) et de la couche d'isolation (4) de la conduite (1), l'axe central de la zone cylindrique (6) à découper étant perpendiculaire à l'axe de conduite de la conduite pré-isolée (1)
- le perçage de la paroi du tuyau de milieu (2) dans la zone dégagée,
- le chauffage du périmètre de perçage (7) obtenu dans le tuyau de milieu (2) au moyen d'un outil de chauffage (15),
- le chauffage du tuyau de dérivation au moyen d'un outil de chauffage (15),
- l'enfoncement du tuyau de dérivation (5) chauffé dans le perçage (7) chauffé, le chauffage du périmètre de perçage (7) et le chauffage du tuyau de dérivation (5) étant effectués simultanément.

2. Procédé selon la revendication 1, **caractérisé en ce que** le chauffage du périmètre de perçage (7) et le chauffage du tuyau de dérivation (5) sont effectués avec le même outil de chauffage (15).

3. Procédé selon l'une quelconque des revendications 1 ou 2, **caractérisé en ce que** le dégagement est effectué au moyen d'un outil de découpe (10), l'outil de découpe (10) étant guidé de manière centrée.

4. Procédé selon l'une quelconque des revendications 1 à 3, **caractérisé en ce que** le perçage de la paroi du tuyau de milieu (2) est guidé deux fois.

5. Procédé selon l'une quelconque des revendications 1 à 4, **caractérisé en ce que** l'enfoncement du tuyau de dérivation (2) chauffé est effectué jusqu'à une butée (19, 21) prédéfinie.

6. Procédé selon l'une quelconque des revendications 1 à 5, **caractérisé en ce que** la profondeur de la zone cylindrique (6) à découper est établie par une butée (11) sur l'outil de découpe (10).

7. Procédé selon l'une quelconque des revendications 1 à 6, **caractérisé en ce que** le perçage de la paroi du tuyau de milieu (2) est réalisé jusqu'à une butée (14) établie.

8. Système avec un tuyau de dérivation (5) en matière plastique et une conduite pré-isolée (1), constituée d'un tuyau de milieu (2) en matière plastique, d'un tuyau d'enveloppe (3) et d'une couche d'isolation (4) agencée entre eux, le tuyau de dérivation (5) étant de préférence destiné à un raccordement de capteur sur une conduite pré-isolée (1) posée, une zone cylindrique dégagée (6) étant présente dans le tuyau d'enveloppe (3) et dans la couche d'isolation (4), l'axe central de la zone cylindrique (6) étant perpendiculaire à l'axe central de la conduite pré-isolée (1) et un perçage (7) agencé concentriquement à l'axe central de la zone cylindrique (6) traversant la paroi du tuyau de milieu (2), le tuyau de dérivation (5) étant agencé dans le perçage (7), le tuyau de dérivation (5) étant réalisé sous forme conique à son extrémité (8) à souder à la conduite (1) et étant soudé au tuyau de milieu par chauffage au moyen d'un outil de chauffage (15).

9. Système selon la revendication 8, **caractérisé en ce que** le cône à l'extrémité (8) du tuyau de dérivation (5) présente entre 105 et 45°, de préférence entre 18 et 35°.

10. Système selon l'une quelconque des revendications 8 ou 9, **caractérisé en ce qu'**une butée (21) est agencée sur le tuyau de dérivation (2) pour limiter la course d'assemblage.

11. Système selon la revendication 10, **caractérisé en ce que** la butée (21) est formée par l'extrémité du tuyau de dérivation ou par un épaulement.
